# FASCICULE DE BREVET EUROPEEN

(11) **EP 1 151 707 B1**
(45) Date de publication et mention de la délivrance du brevet: **11.08.2004**
(21) Numéro de dépôt: 00109495.2
(22) Date de dépôt: 04.05.2000
(51) Int. Cl.: A47J 31/46, A47J 31/40

(54) **Dispositif pour l'extraction d'une substance avec pièce mobile**
Vorrichtung zum Extrahieren einer Substanz mit einem mobilen Teil
Device for extracting a substance provided with a mobile part

(43) Date de publication de la demande: 07.11.2001
(73) Titulaire: SOCIETE DES PRODUITS NESTLE S.A., 1800 Vevey (CH)
(72) Inventeur: Kollep, Alexandre, 1095 Lutry (CH); Fischer, Daniel, 8590 Romanshorn (CH); Stieger, Misha, 9000 St-Gallen (CH)
(74) Mandataire: Borne, Patrice Daniel

(56) Documents cités:
- EP-A- 0 862 882
- DE-A- 1 404 127
- US-A- 4 947 738

## Description

La présente invention concerne un dispositif pour l'extraction d'une substance pour la préparation d'une boisson, comprenant
- une première pièce fixe,
- une seconde pièce mobile par rapport à la première selon un axe de rotation disposé à l'arrière desdites deux pièces, l'avant de chaque pièce ménageant un logement pour la substance à extraire et
- des moyens pour la fermeture et l'ouverture des deux pièces, lesdits moyens étant solidaires de la partie fixe et de la partie mobile.

Dans les machines à café connues pour l'extraction de cartouches fermées, par exemple le dispositif objet du brevet EP 412'570, il n'y a pas de partie mobile, de sorte que la machine forme un seul bloc et l'eau qui stagne pour arriver au logement pour la substance à extraire est dans un environnement chaud, à savoir à une température de l'ordre de 90 °C. Il n'y a donc pas de risque de baisse de température de l'eau. Par contre, dans une machine avec une pièce mobile, comme par exemple la demande de brevet WO 94/02059 et la demande de brevet EP 99117107.5 du 31 août 1999, le corps de chauffe de la machine n'est pas à proximité du logement pour la substance à extraire. De sorte que si on place la commande de démarrage de la machine et la vanne intégrée dans la machine à une certaine distance du logement pour la substance à extraire, on a une certaine quantité d'eau stagnante. En effet, la vanne permet au corps de chauffe de se vider jusqu'à la vanne mais pas au delà. Le tube de liaison entre le logement pour la substance à extraire et la vanne reste rempli d'eau , ladite eau allant se refroidir avec le temps. Plus le temps s'écoule entre deux préparations successives de café, plus la température de l'eau va baisser et plus grande sera l'incidence sur la température du café préparé après. Le brevet DE 1404127 concerne une machine permettant l'extraction de cartouches en papier filtre et un déroulement successif desdites cartouches sans que le consommateur ait à les introduire dans la tête d'extraction. Le but de cette invention est d'obtenir une boisson rapidement avec un bon arôme et avec une bonne propreté, mais sans aucune mention sur la température de l'eau pour l'extraction. Le brevet US 4947738 concerne une machine à café comprenant un vanne quatre voies : il n'est fait aucune mention de la température de l'eau.

Le but de la présente invention est donc de diminuer la quantité d'eau stagnante, de manière à ce que dès la mise en marche de la machine, il n'y ait que peu d'incidence sur la température du café préparé.

La présente invention concerne un dispositif pour l'extraction d'une substance pour la préparation d'une boisson selon le préambule de la revendication 1, dans lequel ledit dispositif comprend une commande et une vanne permettant de diriger l'eau chaude et associée à ladite commande qui sont placées sur la partie supérieure de la seconde pièce mobile, de manière à ce que ladite commande et ladite vanne soient proches du logement pour la substance à extraire et la commande est solidaire d'un disque comportant une fente d'aiguillage , ce disque selon sa position met en communication l'arrivée principale d'eau chaude soit avec la sortie pour le rebut, soit avec la sortie vers la cartouche à extraire, soit vers la sortie pour la production de vapeur.

On réduit ainsi significativement la quantité d'eau stagnante. Par exemple, sans la disposition selon l'invention , on arrive à un volume d'eau stagnante de l'ordre de 10-15 ml, alors que selon l'invention on réduit le volume d'eau stagnante à 1-3 ml. Ce qui signifie que pour un volume de café de l'ordre de 40-100 ml, même après une pause relativement longue, le premier café après ladite pause aura la même température que les autres avec le dispositif selon l'invention. Ce qui n'est bien sûr pas le cas avec le système classique pouvant donner un café ayant une température de 5 °C de moins en raison du volume élevé d'eau stagnante.

Les moyens utilisés pour la fermeture et l'ouverture des deux pièces peuvent être de tout type, en particulier ceux décrits dans la demande de brevet EP précitée No. 99117107.5.

La commande du système agit directement sur la direction prise par l'eau, c'est-à-dire sur la vanne de répartition de l'eau. Dans le dispositif selon l'invention, la commande et la vanne associée comprennent une position repos, une position préparation de la boisson et une position formation de vapeur. Dans la position repos, l'eau résiduelle va au rebut : il est bien entendu, que ce passage au rebut n'a lieu qu'au moment où la commande est basculée en position de repos, c'est-à-dire en fin d'extraction , par exemple d'une cartouche à café. Dans la position de préparation de boisson, l'eau provenant du corps de chauffe passe directement dans le logement pour la substance à extraire pendant la durée nécessaire pour extraire la cartouche. Comme mentionné ci-dessus en fin d'extraction, on revient en position de repos. La dernière position est celle de la production de vapeur, par exemple pour chauffer le lait lors de la préparation d'un cappuccino.

Le type de vanne utilisable selon l'invention n'est pas critique. On utilise de préférence une vanne en céramique.

Le dispositif selon l'invention est normalement actionné manuellement. Il est également possible de prévoir comme vanne une électrovanne commandée par une électronique permettant l'arrêt du café à un volume pré-programmé.

La suite de la description est faite en relation aux dessins, sur lesquels
Fig. 1 représente en perspective un dispositif pour la préparation d'une boisson avec une pièce mobile,
Fig. 2 est une représentation schématique du dispositif selon l'invention au repos et
Fig. 3 est une représentation schématique du dispositif selon l'invention en position de préparation de café.

Le dispositif pour la préparation de boisson comprend :
- une première pièce fixe (1),
- une seconde pièce (2) mobile par rapport à la première selon un axe de rotation (3) disposé à l'arrière desdites deux pièces, l'avant de chaque pièce (1,2) ménageant un logement (4) et (5) respectivement pour la substance à extraire,
- ledit dispositif comprenant en outre des moyens pour la fermeture et l'ouverture des deux pièces, lesdits moyens comprenant un levier de fermeture (6) à deux branches et deux biellettes de traction (7).

Ce dispositif ainsi que son fonctionnement sont déjà décrits dans la demande de brevet EP précitée.

Le levier de fermeture (6) comprend la partie de préhension (8) et la partie levier à proprement parler qui présente un coude à pratiquement 90°. La biellette de traction peut être droite ou comme sur la figure avec des extrémités incurvées. Le logement (4) comprend une bordure périphérique (9) et le logement (5) une bordure périphérique (10).

Les deux branches du levier de fermeture (6) sont fixées à rotation selon un premier axe (11) de part et d'autre de la seconde pièce (2) et les biellettes de traction (7) sont fixées à rotation selon un second axe (12) de part et d'autre de la première pièce (1). Les deux extrémités des deux branches du levier de fermeture, opposées à la partie de préhension (8) et les deux extrémités des biellettes de traction (7) sont solidaires selon un troisième axe mobile (13), de manière à ce que le levier de fermeture coopère avec les biellettes pour assurer la fermeture et l'ouverture du dispositif selon l'invention.

Le consommateur dispose dans le logement (4) une capsule ou une cartouche à extraire (non représentée). Il tire ensuite vers l'avant dans le sens de la flèche A la partie de préhension (8) du levier de fermeture (6), de manière à faire tourner ledit levier autour de son axe (11), ce qui entraine alors la biellette de traction (7) le long de l'axe (13) vers le haut et fait descendre la partie mobile (2) (flèche B) vers la partie fixe (1). On arrive en position de fermeture lorsque le levier de fermeture est sensiblement en position horizontale et les biellettes de traction en position verticale. A ce moment là, les rebords périphériques (9,10) des logements (4,5) sont face à face et doivent garantir une bonne étanchéité du dispositif.

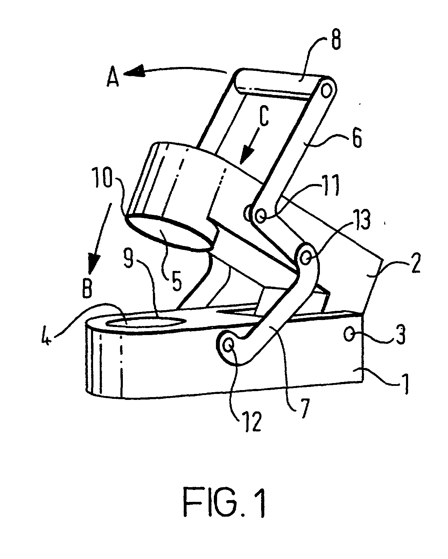

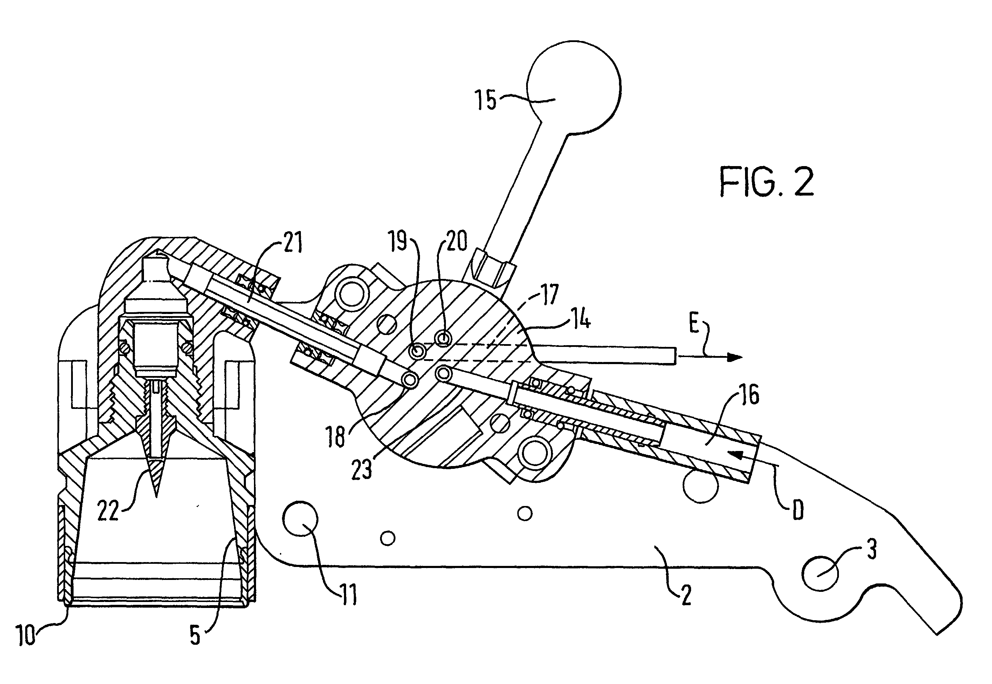

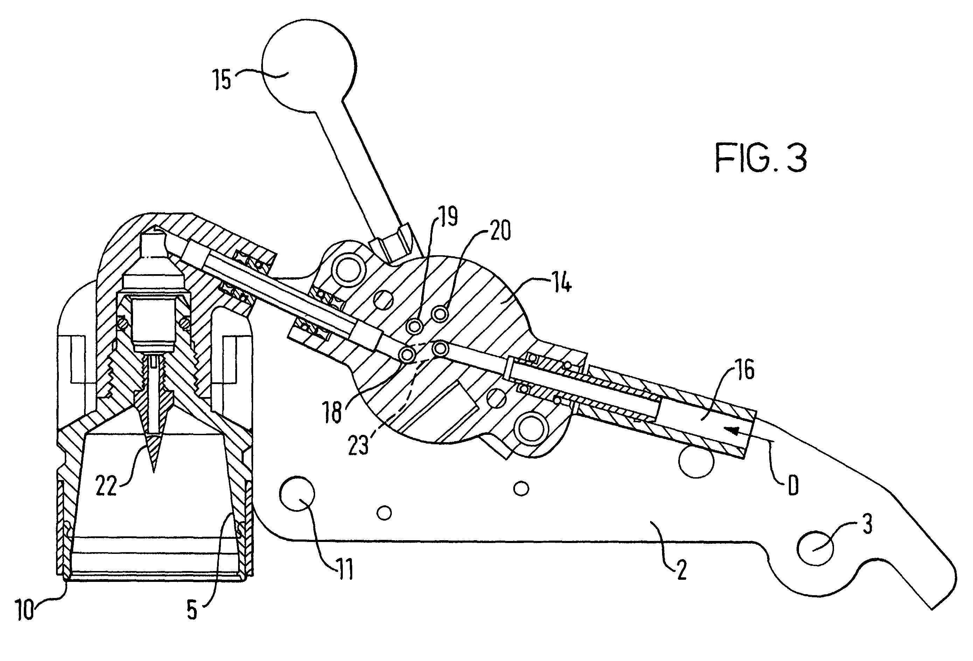

Les Figures 2 et 3 montrent le dispositif de commande non représenté sur la figure 1 : ce dispositif est placé dans la zone C de la figure 1 sur la partie mobile (2). Les éléments identiques ont été affectés des mêmes numéros de référence. La partie mobile (2) comprend un logement (5) pour la cartouche à extraire et une bordure périphérique (10). La vanne (14) permet de diriger l'eau chaude arrivant par le conduit (16) soit au rebut par le conduit (17), soit vers la cartouche par le conduit (21), soit pour la production de vapeur. C'est la commande (15) qui permet cette opération : à cet effet, la commande (15) est solidaire d'un disque comportant une fente d'aiguillage , ce disque selon sa position met en communication l'arrivée principale d'eau chaude (23) soit avec la sortie (19) pour le rebut, soit avec la sortie (18) vers la cartouche à extraire, soit vers la sortie (20) pour la production de vapeur.

Le fonctionnement du dispositif est le suivant : Une cartouche est placée dans le logement (4) et l'utilisateur ferme en abaissant la partie mobile (2) par la partie de préhension (8). Au repos, le dispositif se trouve dans la position de la figure 2 : la cartouche est dans le logement (5) et l'aiguille (22) perce le haut de ladite cartouche. L'utilisateur tire alors vers lui la commande (15), ce qui met le dispositif dans la position de la figure 3 : l'eau chaude passe par les conduits (16) et (21) et arrive sur l'aiguille (22) pour extraire la cartouche. Cette extraction est connue et décrite dans la demande de brevet WO 94/02059 : il est donc inutile de la décrire à nouveau, car cette extraction ne fait pas l'objet de la présente invention. Le café coule dans une tasse disposée en dessous du logement (4). Lorsque la quantité de café dans la tasse est jugée suffisante, l'utilisateur repousse la commande (15) pour revenir dans la position de la figure 2 : l'eau résiduelle va alors au rebut par le conduit (17).

Comme mentionné plus haut, l'eau qui stagne au moment de non utilisation de la machine est uniquement celle qui est dans le conduit (21), ce qui correspond à un volume de l'ordre de 1-3 ml. Cette faible quantité n'a pas de grande influence sur la température finale du café obtenu, c'est-à-dire qu'elle ne baisse pas considérablement la température de la tasse complète.

## Revendications

1. Dispositif pour l'extraction d'une substance pour la préparation d'une boisson, comprenant
- une première pièce fixe (1),
- une seconde pièce mobile (2) par rapport à la première selon un axe de rotation (3) disposé à l'arrière desdites deux pièces, l'avant de chaque pièce (1,2) ménageant un logement (4,5) pour la substance à extraire et
- des moyens (6,7) pour la fermeture et l'ouverture des deux pièces, lesdits moyens étant solidaires de la partie fixe et de la partie mobile,
ledit dispositif est **caractérisé en ce qu'**il comprend une commande (15) et une vanne (14) permettant de diriger l'eau chaude et associée à ladite commande qui sont placées sur la partie supérieure de la seconde pièce mobile (2), de manière à ce que ladite commande et ladite vanne soient proches du logement pour la substance à extraire et **en ce que** la commande (15) est solidaire d'un disque comportant une fente d'aiguillage , ce disque selon sa position met en communication l'arrivée principale d'eau chaude (23) soit avec la sortie (19) pour le rebut, soit avec la sortie (18) vers la cartouche à extraire, soit vers la sortie (20) pour la production de vapeur.

2. Dispositif selon la revendication 1, **caractérisé en ce que** la commande (15) et la vanne (14) associée comprennent une position repos, une position préparation de la boisson et une position formation de vapeur.

3. Dispositif selon l'une des revendications 1 ou 2, **caractérisé en ce que** la vanne (14) est une vanne céramique.

## Patentansprüche

1. Vorrichtung zur Extraktion einer Substanz für die Zubereitung eines Getränks, umfassend
- ein erstes feststehendes Teil (1),
- ein zweites Teil (2), das bezüglich des ersten um eine Drehachse (3) beweglich ist, die im hinteren Bereich der beiden Teile angeordnet ist, wobei der vordere Bereich jedes Teils (1, 2) eine Aufnahme (4, 5) für die zu extrahierende Substanz bildet, und
- Mittel (6, 7) zum Schließen und Öffnen der beiden Teile, wobei diese Mittel mit dem feststehenden Teil und mit dem beweglichen Teil fest verbunden sind,
**dadurch gekennzeichnet, daß** sie ein Steuerorgan (15) und ein Ventil (14) aufweist, das die Zuleitung von Heißwasser gestattet und dem Steuerorgan zugeordnet ist, wobei das Steuerorgan und das Ventil auf dem oberen Teil des beweglichen zweiten Teils (2) so angeordnet sind, daß das Steuerorgan und das Ventil sich nahe bei der Aufnahme für die zu extrahierende Substanz befinden, und daß das Steuerorgan (15) mit einer einen Verteilungsschlitz aufweisenden Scheibe fest verbunden ist, die je nach ihrer Stellung die Hauptzuleitung (23) für Heißwasser entweder mit dem Austritt (19) für den Wasserauslauf oder mit dem Austritt (18) zu der zu extrahierenden Portionspackung oder mit dem Austritt (20) für die Dampferzeugung in Verbindung setzt.

2. Vorrichtung nach Anspruch 1, **dadurch gekennzeichnet, daß** das Steuerorgan (15) und das zugeordnete Ventil (14) in der Ruhestellung eine Getränkzubereitungsstellung und eine Dampferzeugungsstellung besitzen.

3. Vorrichtung nach einem der Ansprüche 1 oder 2, **dadurch gekennzeichnet, daß** das Ventil (14) ein keramisches Ventil ist.

## Claims

1. Device for extracting a substance for the preparation of a beverage, said device comprising
- a fixed first part (1),
- a second part (2) which is movable in relation to the first in accordance with an axis of rotation (3) disposed at the rear of the said two parts, the front of each part (1, 2) providing a housing (4, 5) for the substance to be extracted, and
- means (6, 7) for closing and opening the two parts, the said means being integral with the fixed part and with the moving part;
the said device is **characterised in that** it comprises a control (15) and a valve (14) which makes it possible to control the hot water and is associated with the said control, which control and valve are located on the upper part of the movable second part (2) in such a way that the said control and the said valve are close to the housing for the substance to be extracted, and **in that** the control (15) is integral with a disc having a switching slot, and this disc, according to its position, brings the main hot-water inlet (23) into communication with the outlet (19) for waste or with the outlet (18) towards the cartridge to be subjected to extraction or towards the outlet (20) for producing steam.

2. Device according to claim 1, **characterised in that** the control (15) and the associated valve (14) comprise an inoperative position, a beverage-preparing position and a steam-forming position.

3. Device according to one of claims 1 or 2, **characterised in that** the valve (14) is a ceramic valve.
